# EUROPÄISCHE PATENTANMELDUNG

(11) **EP 3 324 064 A1**
(43) Veröffentlichungstag der Anmeldung: **23.05.2018**
(21) Anmeldenummer: 17001687.7
(22) Anmeldetag: 12.10.2017
(51) Int. Cl.: F16D 13/75, F16D 25/08

(54) **SERVOANTRIEB FÜR EINE REIBUNGSKUPPLUNG**

(30) Priorität: 27.10.2016 DE 102016012855
(71) Anmelder: WABCO GmbH, 30432 Hannover (DE)
(72) Erfinder: Gronau, Jens-Thorsten, 31789 Hameln (DE)

(57) **Zusammenfassung**

Die Erfindung betrifft einen Servoantrieb (1) für eine in Kraftfluss zwischen einem Antriebsmotor eines Kraftfahrzeugs und einem Schaltgetriebe angeordnete Reibungskupplung, aufweisend einen koaxial zu einer Eingangswelle des Schaltgetriebes angeordneten Ringzylinderkörper (2), welcher einen Ringzylinderboden (2a), einen vom Ringzylinderboden (2a) ausgehenden Außenzylinder (3) und einen dazu koaxialen, eine Bohrung (4a) zur Durchführung der Eingangswelle des Schaltgetriebes aufweisenden Innenzylinder (4) aufweist, und mit einem radial zwischen dem Außenzylinder (3) sowie dem Innenzylinder (4) abgedichtet geführten Ringkolben (8), welcher zusammen mit dem Ringzylinderboden (2a), dem Außenzylinder (3) und dem Innenzylinder (4) einen über einen Drucklufteinlass (6) mit Druckluft gesteuert befüllbaren Ringraum (5) begrenzt, und bei dem der Ringkolben (8) mit seiner druckraumfernen Stirnseite auf ein Ausrücklager (17) zum Ausrücken und Einrücken der Reibungskupplung wirkt. Um diesen Servoantrieb (1) zu verbessern, ist vorgesehen, dass zwischen dem Ringzylinderkörper (2) und dem Ringkolben (8) mit diesen zusammenwirkende Mittel (23, 27) zum selbsttätigen Ausgleich von Kupplungsverschleiß angeordnet sind, welcher beim Ausrücken und Einrücken der Reibungskupplung an aneinander reibenden Elementen der Reibungskupplung entsteht.

## Beschreibung

Die Erfindung betrifft einen Servoantrieb für eine in Kraftfluss zwischen einem Antriebsmotor eines Kraftfahrzeugs und einem Schaltgetriebe angeordnete Reibungskupplung, aufweisend einen koaxial zu einer Eingangswelle des Schaltgetriebes angeordneten Ringzylinderkörper, welcher einen Ringzylinderboden, einen vom Ringzylinderboden ausgehenden Außenzylinder und einen dazu koaxialen, eine Bohrung zur Durchführung der Eingangswelle des Schaltgetriebes aufweisenden Innenzylinder aufweist, und mit einem radial zwischen dem Außenzylinder sowie dem Innenzylinder abgedichtet geführten Ringkolben, welcher zusammen mit dem Ringzylinderboden, dem Außenzylinder und dem Innenzylinder einen über einen Drucklufteinlass mit Druckluft gesteuert befüllbaren Ringraum begrenzt, und bei dem der Ringkolben mit seiner druckraumfernen Stirnseite auf ein Ausrücklager zum Ausrücken und Einrücken der Reibungskupplung wirkt.

Ein derartiger Servoantrieb ist aus der DE 10 2005 047 930 A1 bekannt. Bei diesem Servoantrieb besteht das Problem, dass der Ringkolben mit zunehmendem Verschleiß von beim Ausrücken und Einrücken der Reibungskupplung aneinander reibenden Kupplungselementen axial immer weiter in den mit Druckluft gesteuert beaufschlagbaren Ringraum hineinwandert und dessen Volumen so vermindert. Dies wirkt sich nachteilig auf die Steuerung der Druckluftzufuhr zum Ringraum und damit auf das gesteuerte Aus- und Einrücken der Reibungskupplung aus.

Vor diesem Hintergrund liegt der Erfindung die Aufgabe zugrunde, einen verbesserten Servoantrieb vorzuschlagen, der mit einfachen Mitteln ein gleichbleibend komfortables Anfahren des Kraftfahrzeugs und Schalten des Schaltgetriebes gewährleistet.

Gelöst wird diese Aufgabe durch einen Servoantrieb für eine in Kraftfluss zwischen einem Antriebsmotor eines Kraftfahrzeugs und einem Schaltgetriebe angeordnete Reibungskupplung, aufweisend einen koaxial zu einer Eingangswelle des Schaltgetriebes angeordneten Ringzylinderkörper, welcher einen Ringzylinderboden, einen vom Ringzylinderboden ausgehenden Außenzylinder und einen dazu koaxialen, eine Bohrung zur Durchführung der Eingangswelle des Schaltgetriebes aufweisenden Innenzylinder aufweist, und mit einem radial zwischen dem Außenzylinder sowie dem Innenzylinder abgedichtet geführten Ringkolben, welcher zusammen mit dem Ringzylinderboden, dem Außenzylinder und dem Innenzylinder einen über einen Drucklufteinlass mit Druckluft gesteuert befüllbaren Ringraum begrenzt, und bei dem der Ringkolben mit seiner druckraumfernen Stirnseite auf ein Ausrücklager zum Ausrücken und Einrücken der Reibungskupplung wirkt, dadurch, dass zwischen dem Ringzylinderkörper und dem Ringkolben mit diesen zusammenwirkende Mittel zum selbsttätigen Ausgleich von Kupplungsverschleiß angeordnet sind, welcher beim Ausrücken und Einrücken der Reibungskupplung an aneinander reibenden Elementen der Reibungskupplung entsteht.

Durch diese Mittel zum selbsttätigen Ausgleich von Kupplungsverschleiß wird erreicht, dass das Volumen des zwischen dem Ringkolben, dem Außenzylinder, dem Innenzylinder und dem Boden des Ringzylinderkörpers gebildeten, mit Druckluft beaufschlagbaren Ringraums über die gesamte Gebrauchsdauer der Reibungskupplung hinweg im Wesentlichen konstant bleibt, und sich somit auch das Ansprechverhalten der Reibungskupplung nicht verändert.

Hierzu ist bevorzugt vorgesehen, dass die Mittel zum selbsttätigen Ausgleich von Kupplungsverschleiß wenigstens einen Sperrhebel und wenigstens einen Stellhebel umfassen, die an einem Stützring schwenkbar gelagert sind, wobei der wenigstens eine Sperrhebel zumindest einen Sperrzahn und zumindest einen Haltezahn aufweist, wobei der Sperrhebel mittels des Sperrzahns und wechselweise mittels des Haltezahns in Eingriff mit einer Verzahnung ist, die an wenigstens einem axialen Fortsatz eines zylindrischen Fortsatzes des Ringzylinderkörpers ausgebildet ist. Der zylindrische Fortsatz des Ringzylinderkörpers ist hierbei radial und koaxial zwischen dem Außenzylinder und dem Innenzylinder des Ringzylinderkörpers angeordnet ist. Beim Überschreiten eines dem axialen Zahnabstand der Verzahnung entsprechenden Verschleißes der Reibungskupplung werden die genannten Mittel zum Verschleißausgleich um einen Zahnabstand weitergeschaltet, wodurch der Stützring um diesen Zahnabstand hin zum Ringzylinderboden bewegt wird und zulässt, dass sich der Ringkolben ebenfalls um diesen Zahnabstand in den Ringzylinderkörper hineinbewegen kann.

Weiter ist gemäß einer vorteilhaften Ausführungsform vorgesehen, dass der Stützring an dem Innenzylinder sowie an dem zwischen dem Außenzylinder und dem Innenzylinder koaxial angeordneten sowie vom Ringzylinderboden ausgehenden zylindrischen Fortsatz abgedichtet geführt ist, dass der Stützring mit seiner dem Ringkolben zugewandten Seite einen mit Druckluft beaufschlagbaren Ringraum begrenzt, und dass der Stützring mit seiner vom Ringkolben abgewandten Seite einen drucklosen Ringraum zusammen mit dem Innenzylinder, dem zylindrischen Fortsatz und dem Ringzylinderboden begrenzt. Auf diese Weise ist ein sehr kompakter und aus wenigen Einzelteilen bestehender Servoantrieb für die Betätigung einer Reibungskupplung geschaffen, die sich kostengünstig herstellen und einfach montieren lässt.

Hierbei kann weiter vorgesehen sein, dass wenigstens zwei um 180° oder drei um 120° umfangsbezogen zueinander beabstandete Sperrhebel und Stellhebel am Stützring schwenkbar gelagert angeordnet sind. Weiter kann vorgesehen sein, dass die Sperrzähne sowie die Haltezähne der Sperrhebel mit einer Verzahnung zusammenwirken, welche an einem zylindrischen, axialen Fortsatz ausgebildet ist, der an dem vom Ringzylinderboden ausgehenden zylindrischen Fortsatz angeordnet ist.

Gemäß einer anderen Weiterbildung des erfindungsgemäßen Servoantriebs kann vorgesehen sein, dass der Ringkolben einen axial in den mit Druckluft beaufschlagbaren Ringraum ragenden Ringabsatz aufweist, dass dieser Ringabsatz mit einem radialen, zum Innenzylinder hin gerichteten ersten Fortsatz am wenigstens einen Stellhebel zusammenwirkt, dass der wenigstens eine Stellhebel einen zum Außenzylinder hin gerichteten zweiten Fortsatz aufweist, dass der zweite Fortsatz eine Aufnahmenut für einen in die Aufnahmenut eingreifenden Betätigungsfortsatz aufweist, welcher an dem wenigstens einen Sperrhebel ausgebildet ist, dass der wenigstens eine Sperrhebel an dem Stützring um seine Lagerbohrung schwenkbar angeordnet ist, so dass der Sperrhebel von dem zugeordneten Stellhebel betätigt wird, sobald sich der Ringkolben in Richtung zu dem Stützring bewegt.

Außerdem ist bevorzugt vorgesehen, dass axial zwischen dem Ringkolben und dem Stützring eine erste Druckfeder koaxial zum Innenzylinder angeordnet ist, deren Federkraft schwächer ist als die Federkraft der zum Ausrücken und Einrücken der Reibungskupplung dienenden Reibungskupplungsfeder. Hierdurch ist gewährleistet, dass die bei zunehmenden Kupplungsverschleiß sich in Richtung hin zum Servoantrieb verlagernden radial inneren Federzungen der Reibungskupplungsfeder den Ringkolben des Servoantriebs zur Auslösung einer Verschleißkompensation auch axial verschieben können.

Zum sicheren Sperren des Stützrings in seiner jeweiligen Position dann, wenn zur Betätigung der Reibungskupplung der Ringraum des Servoantriebs mit Druckluft beaufschlagt wird, kann vorgesehen sein, dass axial zwischen dem zum Innenzylinder des Ringzylinderkörpers hin gerichteten ersten Fortsatz eines jeden Stellhebels und dem Stützring eine zweite Druckfeder angeordnet ist, welche den Stellhebel gegen einen Anschlag am Stützring drückt, so dass eine Axialbewegung des Stützrings in dieser Stellung des Stellhebels durch den in die Verzahnung am axialen Fortsatz eingreifenden Sperrhebel zum Ringzylinderboden hin gesperrt ist.

Die Erfindung wird nachstehend anhand eines in der beigefügten Zeichnung dargestellten Ausführungsbeispiels näher erläutert. In der Zeichnung zeigt
Fig. 1 eine schematische Querschnittsdarstellung eines erfindungsgemäßen Servoantriebs in einer Stellung zu Anfang seiner Nutzungsdauer,
Fig. 2 den Servoantrieb gemäß Fig. 1 beim Weiterschalten einer Verschleißkompensationsvorrichtung nach dem Auftreten eines vorbestimmbaren Kupplungsverschleißes, und
Fig. 3 den Servoantrieb gemäß Fig. 1 und Fig. 2 nach der Durchführung einer Verschleißkompensation.

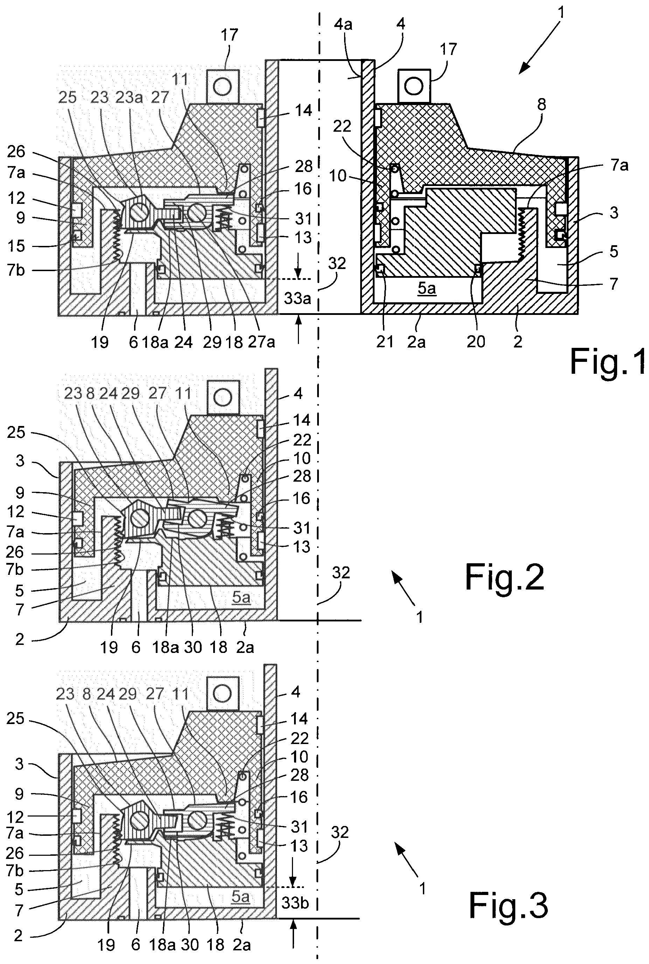

In Fig. 1 ist ein erfindungsgemäßer Servoantrieb 1 mit seiner Längsachse 32 dargestellt, der einen Ringzylinderkörper 2 mit einem Ringzylinderboden 2a, einen Außenzylinder 3 und einen Innenzylinder 4 aufweist. Im Innenzylinder 4 ist eine Bohrung 4a zum Durchführen einer nicht dargestellten Getriebeeingangswelle vorhanden. Radial zwischen dem Außenzylinder 3 und dem Innenzylinder 4 ist ein Ringkolben 8 axial verschiebbar geführt, dessen radial äußeres Kolbenhemd 9 einen radial außen einen Filzring 12 als Verschmutzungsabweiser sowie einen radial äußeren Dichtungsring 15 trägt, die an der radialen Innenfläche des Außenzylinders 3 anliegen. Das radial innere Kolbenhemd 10 des Ringkolbens 8 ist mittels eines ersten inneren Führungsrings 13 und einem dazu axial beabstandeten zweiten inneren Führungsring 14 an einer radialen Außenfläche des Innenzylinders 4 geführt und mittels eines radial inneren Dichtungsrings 16 gegenüber dem Innenzylinder 4 abgedichtet.

Radial zwischen dem Innenzylinder 4 und einem zylindrischen Fortsatz 7 des Ringzylinderkörpers 2, der koaxial zwischen dem Außenzylinder 3 und dem Innenzylinder 4 an dem Ringzylinderkörper 2 ausgebildet ist, ist ein Stützring 18 mittels eines radial äußeren Dichtungsrings 20 und eines radial inneren Dichtungsrings 21 abgedichtet geführt. Hierbei begrenzt der Stützring 18 zusammen mit dem Ringzylinderboden 2a, dem Innenzylinder 4 und dem Fortsatz 7 einen drucklosen Ringraum 5a.

Der zylindrische Fortsatz 7 des Ringzylinderkörpers 2 weist wenigstens einen axialen Fortsatz 7a mit einer radial nach innen gerichteten Verzahnung 7b auf, die mit wenigstens einem Sperrzahn 25 und wechselweise mit wenigstens einem Haltezahn 26 zusammenwirkt, welche an einem Sperrhebel 23 ausgebildet sind. Vorzugsweise ist der axiale Fortsatz 7a als zylindrischer Fortsatz mit einer umlaufenden Verzahnung 7b ausgebildet, mit dem wenigstens zwei um 180° umfangsbezogen versetzt angeordnete, vorzugsweise drei um 120° umfangsbezogen versetzte Sperrhebel 23 zusammenwirken. Nachfolgen werden die Konstruktionsdetails jeweils nur für einen Sperrhebel und einen Stellhebel 27 dargelegt.

Der jeweilige Sperrhebel 23 weist eine Lagerbohrung auf, die auf einer ersten Schwenkachse 23a aufgeschoben ist. Die erste Schwenkachse 23a ist an einer Lagergabel 19 des Stützrings 18 ausgebildet. Hierdurch ist der Sperrhebel 23 an einer Lagergabel 19 des Stützrings 18 schwenkbar gelagert. Mit dem wenigstens einen Sperrhebel 23 wirkt ein zugeordneter Stellhebel 27 zusammen, der einen sperrhebelseitigen ersten Fortsatz 29 mit einer Aufnahmenut 30 für einen darin eingreifenden Betätigungsfortsatz 24 aufweist, welcher am zugeordneten Sperrhebel 23 ausgebildet ist. Der Stellhebel 27 ist am Stützring 18 an einer zweiten Schwenkachse 27a schwenkbar gelagert angeordnet.

Der Stellhebel 27 weist einen ringkolbenseitigen ersten Fortsatz 28 auf, der an einem axial nach innen vorstehenden Ringabsatz 11 am Ringkolben 8 anliegt. Zwischen dem Ringkolben 8 und dem Stützring 18 ist benachbart zum radial inneren Kolbenhemd 10 eine koaxial angeordnete erste Druckfeder 22 angeordnet, die dafür sorgt, dass der Ringkolben 8 über das Ausrücklager 17 immer an der nicht dargestellten Reibungskupplungsfeder anliegt sowie zum Stützring 18 einen im Wesentlichen über die gesamte Nutzungsdauer der Reibungskupplung gleichen Abstand einhält. Die Federkraft der ersten koaxialen Druckfeder 22 muss dafür geringer sein als die Federkraft der Reibungskupplungsfeder.

Mittels einer zweiten Druckfeder 31, welche zwischen dem Stützring 18 und dem ringkolbenseitigen erste Fortsatz 28 am wenigstens einen Stellhebel 27 angeordnet ist, wird der sperrhebelseitige zweite Fortsatz 29 an einem Anschlag 18a am Stützring 18 gehalten, wodurch der Sperrhebel 23 an einem Schwenken im Uhrzeigersinn in der in Fig. 1 dargestellten Stellung gehindert ist. Zudem wird der Stützring 18 durch den Eingriff der Haltezähne 26 in die Verzahnung 7b in der in Fig. 1 dargestellten Stellung gegen eine Bewegung in Richtung hin zum Ringzylinderboden 2a gesperrt. Folglich bewegt sich nur der Ringkolben 8 bei einer Druckluftbeaufschlagung des Ringraumes 5 in Richtung zu der nicht dargestellten Reibungskupplung, deren Reibungskupplungsfeder über das Ausrücklager 17 im Sinne des Ausrückens der Reibungskupplung betätigt wird.

Die Reibungskupplung wird wieder eingerückt, wenn der mit Druckluft beaufschlagte Ringraum 5 über den Drucklufteingang 6 gesteuert entlüftet wird, so dass der Ringkolben 8 in die in Fig. 1 dargestellte Stellung zurückkehrt.

Wenn nach sehr vielen Reibungskupplungsbetätigungen ein nicht vernachlässigbar großer Verschleiß an den Kupplungsbelägen aufgetreten ist, haben sich die radial inneren Enden der Reibungskupplungsfeder merklich in Richtung hin zu dem Servoantrieb 1 verlagert. In dessen Folge ist der Ringkolben 8 tiefer in den Ringzylinderkörper 2 eingedrungen, was in Fig. 2 erkennbar ist. Dies führt bei einem ausreichend großen Kupplungsverschleiß dazu, dass der Stellhebel 27, wie in Fig. 2 dargestellt, über den axial vorstehenden Ringabsatz 11 am Ringkolben 8 und den ringkolbenseitigen Fortsatz 28 am Stellhebel 27 verschwenkt ist, und dadurch der Sperrhebel 23 in die entgegengesetzte Richtung verschwenkt wurde. In dieser Situation trifft der obere Sperrzahn 25 des Sperrhebels 23 auf die Verzahnung 7d, während die zwei dargestellten Haltezähne 26 die Verzahnung 7b verlassen haben, so dass der Stützring 18 von der Verzahnung 7b freigegeben ist und durch den Druck der ersten Druckfeder 22 tiefer in Richtung zum Ringzylinderboden 2a bewegt wird. Dadurch gelangen der Sperrhebel 23 und der Stellhebel 27 in die in Fig. 3 dargestellte Stellung zurück. In dieser Stellung greifen die Haltezähne 26 um eine Zahnbreite tiefer in die Verzahnung 7b ein, so dass der Stützring 18 in dieser Stellung gegen ein weiteres Absinken in Richtung zum Ringzylinderboden 2a gesperrt ist. Hierdurch gewährleistet der Ringkolben 8, welcher über das Ausrücklager 17 an der Reibungskupplungsfeder anliegt, zusammen mit dem Stützring 18 ein im Wesentlichen gleichbleibendes Volumen des mit Druckluft beaufschlagbaren Ringsraumes 5, so dass sich beim Ansprechen der Reibungskupplung bei Betätigung mittels des Servoantriebs 1 über die gesamte Nutzungsdauer der Reibungskupplung nichts Wesentliches ändert.

Ein Vergleich der Figuren 1 und 3 zeigt, dass nach einem Verschleißausgleich der Stützring 18 erkennbar tiefer in den Ringzylinderkörper 2 eingetaucht ist, so dass nach dem Verschleißausgleich der Abstand 33b des Stützrings 18 vom kupplungsfernen Ende des Servoantriebs 1 kleiner ist als es dieser Abstand 33a vor dem Verschleißausgleich war. Dies veranschaulicht, dass trotz eines axial tieferen, verschleißbedingten Eintauchens des Ringkolbens 8 in den Ringzylinderkörper 2 das Volumen des mit Druckluft beaufschlagbaren Ringsraumes konstant geblieben ist. Demnach ist auch das Betätigungsverhalten des Servoantriebs 1 trotz der Verschleißnachstellung konstant geblieben.

Alle in der vorstehenden Figurenbeschreibung, in den Ansprüchen und in der Beschreibungseinleitung genannten Merkmale sind sowohl einzeln als auch in beliebiger Kombination miteinander einsetzbar. Die Erfindung ist somit nicht auf die beschriebenen und beanspruchten Merkmalskombinationen beschränkt, vielmehr sind alle Merkmalskombinationen als offenbart zu betrachten.

### Bezugszeichenliste (Teil der Beschreibung)

- 1: Servoantrieb
- 2: Ringzylinderkörper
- 2a: Ringzylinderboden
- 3: Außenzylinder des Ringzylinderkörpers
- 4: Innenzylinder des Ringzylinderkörpers
- 4a: Bohrung im Innenzylinder
- 5: Mit Druck beaufschlagbarer Ringraum
- 5a: Druckloser Ringraum
- 6: Drucklufteingang
- 7: Zylindrischer Fortsatz am Ringzylinderboden
- 7a: Gezahnter, axialer Fortsatz
- 7b: Verzahnung am axialen Fortsatz
- 8: Ringkolben
- 9: Äußeres Kolbenhemd des Ringkolbens
- 10: Inneres Kolbenhemd des Ringkolbens
- 11: Axial vorstehender Ringabsatz des Ringkolbens
- 12: Filzring
- 13: Erster innerer Führungsring
- 14: Zweiter innerer Führungsring
- 15: Äußerer Dichtungsring
- 16: Innerer Dichtungsring
- 17: Ausrücklager
- 18: Stützring
- 18a: Anschlag am Stützring
- 19: Lagergabel
- 20: Äußerer Dichtungsring am Stützring
- 21: Innerer Dichtungsring am Stützring
- 22: Erste Druckfeder
- 23: Sperrhebel, Mittel für Verschleißausgleich
- 23a: Erste Schwenkachse
- 24: Betätigungsfortsatz
- 25: Sperrzahn
- 26: Haltezahn
- 27: Stellhebel, Mittel für Verschleißausgleich
- 27a: Zweite Schwenkachse
- 28: Ringkolbenseitiger erster Fortsatz des Stellhebels
- 29: Sperrhebelseitiger zweiter Fortsatz des Stellhebels
- 30: Aufnahmenut im zweiten Fortsatz
- 31: Zweite Druckfeder
- 32: Längsachse des Servoantriebs
- 33a: Abstand (vor einem Verschleißausgleich)
- 33b: Abstand (nach einem Verschleißausgleich)

## Patentansprüche

1. Servoantrieb (1) für eine in Kraftfluss zwischen einem Antriebsmotor eines Kraftfahrzeugs und einem Schaltgetriebe angeordnete Reibungskupplung, aufweisend einen koaxial zu einer Eingangswelle des Schaltgetriebes angeordneten Ringzylinderkörper (2), welcher einen Ringzylinderboden (2a), einen vom Ringzylinderboden (2a) ausgehenden Außenzylinder (3) und einen dazu koaxialen, eine Bohrung (4a) zur Durchführung der Eingangswelle des Schaltgetriebes aufweisenden Innenzylinder (4) aufweist, und mit einem radial zwischen dem Außenzylinder (3) sowie dem Innenzylinder (4) abgedichtet geführten Ringkolben (8), welcher zusammen mit dem Ringzylinderboden (2a), dem Außenzylinder (3) und dem Innenzylinder (4) einen über einen Drucklufteinlass (6) mit Druckluft gesteuert befüllbaren Ringraum (5) begrenzt, und bei dem der Ringkolben (8) mit seiner druckraumfernen Stirnseite auf ein Ausrücklager (17) zum Ausrücken und Einrücken der Reibungskupplung wirkt, **dadurch gekennzeichnet, dass** zwischen dem Ringzylinderkörper (2) und dem Ringkolben (8) mit diesen zusammenwirkende Mittel (23, 27) zum selbsttätigen Ausgleich von Kupplungsverschleiß angeordnet sind, welcher beim Ausrücken und Einrücken der Reibungskupplung an aneinander reibenden Elementen der Reibungskupplung entsteht.

2. Servoantrieb nach Anspruch 1, **dadurch gekennzeichnet, dass** die Mittel zum selbsttätigen Ausgleich von Kupplungsverschleiß wenigstens einen Sperrhebel (23) und wenigstens einen Stellhebel (27) umfassen, die an einem Stützring (18) schwenkbar gelagert sind, wobei der wenigstens eine Sperrhebel (23) zumindest einen Sperrzahn (25) und zumindest einen Haltezahn (26) aufweist, wobei der Sperrhebel (23) mittels des Sperrzahns (25) und wechselweise mittels des Haltezahns (26) in Eingriff mit einer Verzahnung (7b) ist, die an wenigstens einem axialen Fortsatz (7a) eines zylindrischen Fortsatzes (7) des Ringzylinderkörpers (2) ausgebildet ist, wobei der zylindrische Fortsatz (7) des Ringzylinderkörpers (2) radial und koaxial zwischen dem Außenzylinder (3) und dem Innenzylinder (4) des Ringzylinderkörpers (2) angeordnet ist, und bei dem bei Überschreiten eines dem axialen Zahnabstand der Verzahnung (7b) entsprechenden Verschleißes der Reibungskupplung die Mittel (23, 27) zum Verschleißausgleich um einen Zahnabstand weitergeschaltet werden, wodurch der Stützring (18) um diesen Zahnabstand hin zum Ringzylinderboden (2a) bewegt wird und zulässt, dass sich der Ringkolben (8) ebenfalls um diesen Zahnabstand in den Ringzylinderkörper (2) hinein bewegen kann.

3. Servoantrieb nach Anspruch 2, **dadurch gekennzeichnet, dass** der Stützring (18) an dem Innenzylinder (4) sowie an dem zwischen dem Außenzylinder (3) und dem Innenzylinder (4) koaxial angeordneten sowie vom Ringzylinderboden (2a) ausgehenden zylindrischen Fortsatz (7) abgedichtet geführt ist, dass der Stützring (18) mit seiner dem Ringkolben (8) zugewandten Seite einen mit Druckluft beaufschlagbaren Ringraum (5) begrenzt, und dass der Stützring (18) mit seiner vom Ringkolben (8) abgewandten Seite einen drucklosen Ringraum (5a) zusammen mit dem Innenzylinder (4), dem zylindrischen Fortsatz (7) und dem Ringzylinderboden (2a) begrenzt.

4. Servoantrieb nach Anspruch 2 oder 3, **dadurch gekennzeichnet, dass** wenigstens zwei um 180° oder drei um 120° umfangsbezogen zueinander beabstandete Sperrhebel (23) und Stellhebel (27) am Stützring (18) schwenkbar gelagert angeordnet sind, und dass die Sperrzähne (25) sowie die Haltezähne (26) der Sperrhebel (23) mit einer Verzahnung (7b) zusammenwirken, welche an einem zylindrischen, axialen Fortsatz (7a) ausgebildet ist, der an dem vom Ringzylinderboden (2a) ausgehenden zylindrischen Fortsatz (7) angeordnet ist.

5. Servoantrieb nach Anspruch 2, 3 oder 4, **dadurch gekennzeichnet, dass** der Ringkolben (8) einen axial in den mit Druckluft beaufschlagbaren Ringraum (5) ragenden Ringabsatz (11) aufweist, dass der Ringabsatz (11) mit einem radialen, zum Innenzylinder (4) hin gerichteten ersten Fortsatz (28) am wenigstens einen Stellhebel (27) zusammenwirkt, dass der wenigstens eine Stellhebel (27) einen zum Außenzylinder (3) hin gerichteten zweiten Fortsatz (29) aufweist, dass der zweite Fortsatz (29) eine Aufnahmenut (30) für einen in die Aufnahmenut (30) eingreifenden Betätigungsfortsatz (24) aufweist, welcher an dem wenigstens einen Sperrhebel (23) ausgebildet ist, und dass der wenigstens eine Sperrhebel (23) an dem Stützring (18) um seine Lagerbohrung schwenkbar angeordnet ist, so dass der Sperrhebel (23) von dem zugeordneten Stellhebel (27) betätigt wird, sobald sich der Ringkolben (8) in Richtung zu dem Stützring (18) bewegt.

6. Servoantrieb nach einem der Ansprüche 2 bis 5, **dadurch gekennzeichnet, dass** axial zwischen dem Ringkolben (8) und dem Stützring (18) eine erste Druckfeder (22) koaxial zum Innenzylinder (4) angeordnet ist, deren Federkraft schwächer ist als die Federkraft als die zum Ausrücken und Einrücken der Reibungskupplung dienenden Reibungskupplungsfeder.

7. Servoantrieb nach einem der Ansprüche 2 bis 6, **dadurch gekennzeichnet, dass** axial zwischen dem zum Innenzylinder (4) des Ringzylinderkörpers (2) hin gerichteten ersten Fortsatz (28) eines jeden Stellhebels (27) und dem Stützring (18) eine zweite Druckfeder (31) angeordnet ist, welche den Stellhebel (27) gegen einen Anschlag (18a) am Stützring (18) drückt, so dass eine Axialbewegung des Stützrings (18) in dieser Stellung des Stellhebels (27) durch den in die Verzahnung (7b) am axialen Fortsatz (7a) eingreifenden Sperrhebel (23) zum Ringzylinderboden (2a) hin gesperrt ist.
